# EUROPÄISCHE PATENTSCHRIFT

(11) **EP 2 636 547 B1**
(45) Veröffentlichungstag und Bekanntmachung des Hinweises auf die Patenterteilung: **06.04.2016**
(21) Anmeldenummer: 13000446.8
(22) Anmeldetag: 30.01.2013
(51) Int. Cl.: B60D 5/00

(54) **Wellenbalg eines Übergangs zwischen zwei gelenkig miteinander verbundenen Fahrzeugen**
Bellow of a passage between two articulated vehicles
Soufflet d'un passage entre deux véhicules articulés

(30) Priorität: 06.03.2012 DE 202012002181 U
(43) Veröffentlichungstag der Anmeldung: 11.09.2013
(73) Patentinhaber: Hübner GmbH & Co. KG, 34123 Kassel (DE)
(72) Erfinder: Mosaner, Knud, 34127 Kassel (DE)
(74) Vertreter: Walther, Walther & Hinz GbR

(56) Entgegenhaltungen:
- EP-A1- 2 149 461
- EP-A1- 2 149 462
- DE-C1- 10 005 994
- DE-C1- 10 044 303

## Beschreibung

Die Erfindung betrifft einen Wellenbalg eines Übergangs zwischen zwei gelenkig miteinander verbundener Fahrzeuge.

Übergänge zwischen zwei gelenkig miteinander verbundenen Fahrzeuge, seien es Schienenfahrzeuge oder z. B. Busse, sind hinreichend bekannt. Hierbei sind die Fahrzeugteile durch ein Gelenk miteinander gekuppelt, wobei sich im Bereich dieses Gelenkes der Übergang befindet, der eine Übergangsbrücke umfasst, die durch einen tunnelförmigen Balg umspannt wird. Hierbei wird gegebenenfalls nicht nur die Brücke umspannt, sondern darüber hinaus auch das Gelenk. Dies gilt insbesondere bei Bussen.

Aus der EP 2 149 461 A1 ist ein gattungsgemäßen Balg bekannt.

Aus der DE 100 05 994 C1 ist ein Faltenbalg eines Übergangs eines Gelenkfahrzeugs bekannt, der auf der Innenseite der Seitenwände des Faltenbalges jeweils eine Faltenbalgschürze aufweist. Die Faltenbalgschürze weist im Übergang zu der Seitenwand des Faltenbalges Profile auf, die jeweils durch im Faltengrund der Falten des Faltenbalges angeordneten Klettbänder im Faltengrund gehalten werden.

Der Balg, beispielsweise ein Wellenbalg, weist einen mit einem Kunststoff beschichteten Festigkeitsträger auf. Der Festigkeitsträger ist hierbei üblicherweise ein Gewebe, kann aber auch ein Gewirke oder Gestrick sein. Dieser Festigkeitsträger ist, um dem Balg die erforderliche Dichtigkeit zu vermitteln, mit einem Kunststoff beschichtet, z. B. einem TPU, EPDM oder auch einem Silikon. Silikonbeschichtete Festigkeitsträger zur Herstellung von Bälgen haben den Vorteil, dass diese hochbrandbeständig sein können. Der Grund hierfür liegt in der Natur des Silikons. Silikonelastomere als Beschichtung von Festigkeitsträgern, insbesondere Geweben, haben allerdings den Nachteil, dass derart beschichtete Gewebe äußerst nachgiebig sind.

Nun sind Bälge bekannt, die im Querschnitt, d. h. in der Vorderansicht pilzförmig ausgebildet sind, d. h. im Bereich der Brücke bis zur Hüfte eines Menschen gehend, einen verminderten Querschnitt aufweisen, wobei sich im Anschluss daran der Balg pilzförmig aufweitet. Man spricht hierbei auch von der totenkopfförmigen Gestalt des Balges. Bei einem Balg, bei dem der Übergang vom schmalen Bereich des Balges zum aufgeweiteten Bereich, sich etwa in Hüfthöhe des Menschen befindet, ist diese Nachgiebigkeit des Balges insofern von Nachteil, als dann, wenn sich Personen an den Balg anlehnen, der Balg nach außen ausbaucht, und auch so ohne Weiteres auch nicht mehr in seine Ursprungsform zurückgeht. Grundsätzlich besteht diese Gefahr nicht nur bei den im Querschnitt pilzförmig ausgebildeten Bälgen, sondern auch bei üblichen Bälgen mit gerade verlaufender Wandung, die mit einem Silikon beschichtet sind, insbesondere wenn es sich um ein Silikonelastomer handelt, was hochbrandbeständig ist.

Die der Erfindung zugrunde liegende Aufgabe besteht demzufolge darin, für eine Erhöhung der Steifigkeit der Wellen eines Balges zu sorgen.

Diese Aufgabe wird erfindungsgemäß durch Anspruch 1 gelöst. Üblicherweise sind die Wellen eines Wellenbalges nach innen gerichtet, d. h. in Richtung des Durchganges bzw. zur Mitte des Übergangs zu. Insofern befindet sich das Versteifungsglied auf der Innenseite der Welle mithin auf der Außenseite des Wellen balges. Dieses Versteifungsglied sorgt dafür, dass der Balg nicht oder nur noch in geringem Umfange eingedrückt werden kann. Die Laschen, die insbesondere als mit Kunststoff beschichtete Festigkeitsträger, z. B. in Form eines Gewebes ausgebildet sind, befinden sich auf der Innenseite der Welle, und dienen als Anlenkung für das im Querschnitt U-förmige Profil. Insofern ist nicht erforderlich, dass sich die Laschen über die gesamte Länge des im Querschnitt U-förmigen Profiles erstrecken, vielmehr kann es ausreichend sein, wenn die Laschen nur als Befestigungsmittel für die beiden Enden des Profiles auf der Innenseite einer Welle eines Wellenbalges vorgesehen sind.

Im Einzelnen ist in diesem Zusammenhang vorgesehen, dass die Laschen zu beiden Seiten der Scheitellinie der Welle an der Innenseite der Welle befestigt sind. Hierdurch wird erreicht, dass das im Querschnitt U-förmige Profil, das zur Aussteifung der Welle dient, im Wesentlichen genau in der Scheitellinie der Welle verläuft.

Vorteilhafte Merkmale und Ausgestaltungen zu der Erfindung ergeben sich aus den Unteransprüchen.

So ist des Weiteren vorgesehen, dass sich das Versteifungsglied über einen Teil des Umfangs der Welle erstreckt, nämlich nur über den Teil des Umfangs des Balges, bei dem die Gefahr besteht, dass durch Passagiere der Balg an dieser Stelle oder an diesen Stellen eingedrückt werden kann.

Im Einzelnen ist in diesem Zusammenhang vorgesehen, dass bei einer im Querschnitt des Balges pilzartigen Ausgestaltung des Balges, das Versteifungsglied einer Welle im Bereich des Übergangs vom Stempel zum Kopf des Balges angeordnet ist. Das heißt, dass sich das Versteifungsglied an einer Stelle des Balges befindet, die tatsächlich sich in etwa in Hüfthöhe eines Menschen befindet, sodass nicht die Gefahr besteht, dass wenn sich Personen mit dem Gesäß an dem Balg anlehnen, sich der Balg in Richtung auf die Außenseite des Balges zu ausbaucht.

Nach einem weiteren Merkmal der Erfindung weist die im Querschnitt in etwa U-förmige Welle eines Wellenbalges mindestens drei Streifen eines mit Kunststoff beschichteten Festigkeitsträgers auf, wobei die beiden Schenkelstreifen durch einen im Bereich des Steges der Welle angeordneten Stegstreifen verbunden sind. Mithilfe eines solchen 3-teiligen Aufbaus der Welle für einen Wellenbalg ist der Aufbau gleichmäßiger Wellen möglich, da hierdurch die Kontur der Wellen, insbesondere im Eckbereich eines Balges durch die entsprechende Abwicklung der Streifen Berücksichtigung finden kann. Die Verbindung der einzelnen Schenkel- und Stegstreifen erfolgt durch Kleben und/oder Nähen.

Nach einer ersten Ausführungsform ist vorgesehen, dass die beiden seitlichen Schenkelstreifen einer im Querschnitt U-förmigen Welle zur Bildung zweier Laschen über die Oberfläche auf der Innenseite der Welle so weit überstehen, dass diese beiden Laschen von dem im Querschnitt U-förmigen Profil erfassbar sind. Hieraus wird deutlich, dass die beiden Laschen im Prinzip durch die Schenkelstreifen gebildet werden.

Eine andere Ausführungsform zeichnet sich dadurch aus, dass zwischen den beiden Schenkelstreifen der im Querschnitt in etwa U-förmigen Welle und dem im Stegbereich der Welle angeordneten Stegstreifen, zwei Streifen zur Bildung der auf der Innenseite der Welle angeordneten Laschen befestigt sind. Das heißt, dass im Verbindungsbereich zwischen Stegstreifen einerseits und den beiden Schenkelstreifen andererseits, Streifen, insbesondere aus einem kunststoffbeschichteten Festigkeitsträger angeordnet sind, und durch die Verbindung zwischen Stegstreifen und Schenkelstreifen gehalten sind. Auch hier stehen die durch die Streifen gebildeten Laschen über die Innenseite der Welle über, sodass diese durch das im Querschnitt U-förmige Profil zur Versteifung der Welle von innen heraus erfassbar sind.

Bei einer weiteren dritten Ausführungsform sind im Bereich der Verbindung der Schenkelstreifen mit den Stegstreifen einer im Querschnitt in etwa U-förmigen Welle auf der Innenseite der Welle zwei Streifen zur Bildung zweier Laschen befestigt. Im Gegensatz zu der zuvor beschriebenen Ausführungsform befinden sich hier die Streifen zur Bildung der Laschen auf der Innenseite der Welle an den beiden Schenkelstreifen und nicht zwischen Schenkelstreifen und Stegstreifen. Die Befestigung der Streifen untereinander erfolgt auch hierbei durch Verkleben und/oder Nähen.

Die Wellen eines Wellenbalges sind darüber hinaus durch umlaufende Balgrahmen miteinander verbunden, wobei durch diese Balgrahmen letztendlich die Stabilität des Balges als solchen bewirkt wird. Der Festigkeitsträger der Laschen und/oder der Schenkel- und Stegstreifen ist bevorzugt mit einem Silikon beschichtet. Es wurde bereits zu eingangs darauf hingewiesen, dass ein Silikonelastomer erhöhten Anforderungen an die Brandsicherheit genügt. Anhand der Zeichnungen wird die Erfindung nachstehend beispielhaft näher erläutert.
- Fig. 1: zeigt einen im Querschnitt, das heißt in der Vorderansicht pilzförmigen Wellenbalg;
- Fig. 2: zeigt eine Seitenansicht auf dem Balg gemäß Fig. 1 ebenfalls noch in perspektivischer Darstellung;
- Fig. 3: zeigt eine Seitenansicht gemäß Fig. 1;
- Fig. 4: zeigt eine erste Ausführungsform der Anordnung der Laschen auf der Innenseite der Welle eines Wellenbalges;
- Fig. 5: zeigt eine zweite Ausführungsform der Anordnung der Laschen auf der Innenseite der Welle eines Wellenbalges;
- Fig. 6: zeigt eine dritte Ausführungsform der Anordnung der Laschen auf der Innenseite eines Wellenbalges.

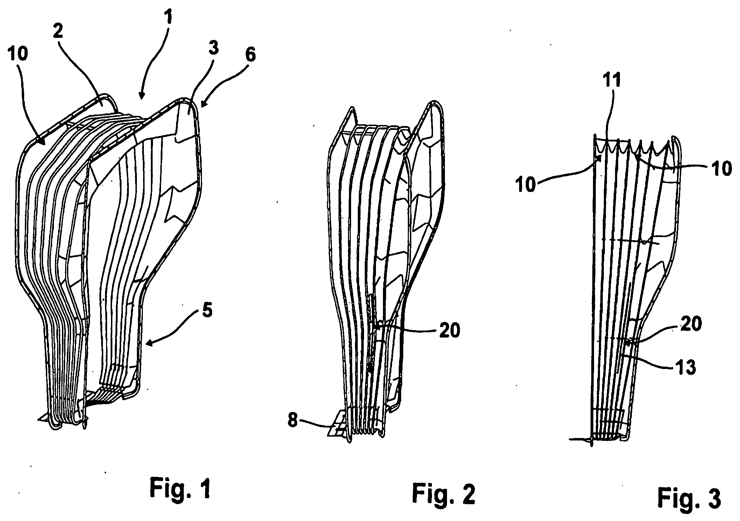

Der in den Fig. 1 bis 3 dargestellte Balg 1 weist zwischen zwei Rahmen 2 und 3 mehrere Wellen 10 auf. Eine jede Welle 10 ist, wie sich das aus der Darstellung insbesondere gemäß Fig. 3 ergibt mit der jeweils benachbarten Welle 10 durch einen umlaufenden Balgrahmen 11 verbunden. Dieser Balgrahmen ist im Querschnitt U-förmig ausgebildet und erfasst die beiden Schenkel einer im Querschnitt in etwa U-förmigen Welle klemmend.

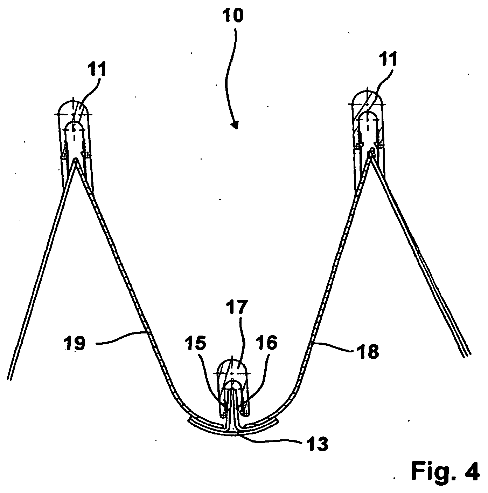

Exemplarisch ist in einer Welle, d. h. auf der Innenseite einer Welle eines Wellenbalges 1 ein Versteifungsglied 20 angeordnet. Das Versteifungsglied 20 befindet sich in etwa im Übergang vom Stempel 5 des Balges zum Kopf 6 des Balges 1. Das heißt, das Versteifungsglied 20 befindet sich in etwa auf Hüfthöhe über der Übergangsbrücke 8. Hierdurch wird verhindert dass sich Personen, die sich in diesem Bereich anlehnen, ein Ausbauchen des Balges nach außen bewirken können. Die Ausbildung des Verstelfungsgliedes ergibt sich insbesondere in Anschauung der Fig. 4 bis 6, wo die unterschiedlichsten Ausführungsformen für die Bildung der Laschen dargestellt sind.

Auf der Innenseite der Welle 10 befinden sich zwei Laschen 15 und 16. Die Laschen 15 und 16 sind durch ein im Querschnitt U-förmiges Profil 17 klemmend erfasst. Für die Anordnung der Laschen 15, 16 ist nach Fig. 4 vorgesehen, dass diese an den Schenkelstreifen 18, 19 auf der Innenseite der Welle 10 angeordnet sind, wobei auf der Außenseite der Welle ein Stegstreifen 13 angeordnet ist. Die Verbindung zwischen Schenkelstreifen 18, 19, Stegstreifen 13 und den beiden Laschen 15, 16 erfolgt durch Nähen und Verkleben.

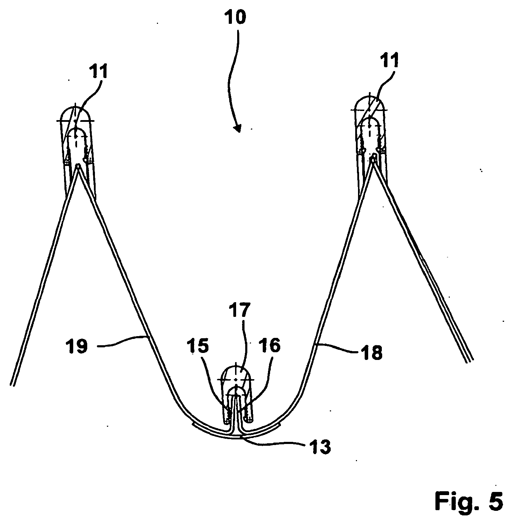

Bei der Ausführungsform gemäß Fig. 5 ist in Abweichung zu der Ausführung gemäß Fig. 4 vorgesehen, dass durch die Schenkelstreifen 18, 19 die beiden Laschen 15, 16 gebildet sind. Das heißt, dass die beiden Schenkelstreifen 18, 19 auf der Innenseite der Welle 10 über die Innenseite der Welle überstehen, und im Bereich des Überstandes durch das Profil 17, das im Querschnitt etwa U-förmig ausgebildet ist, erfasst sind.

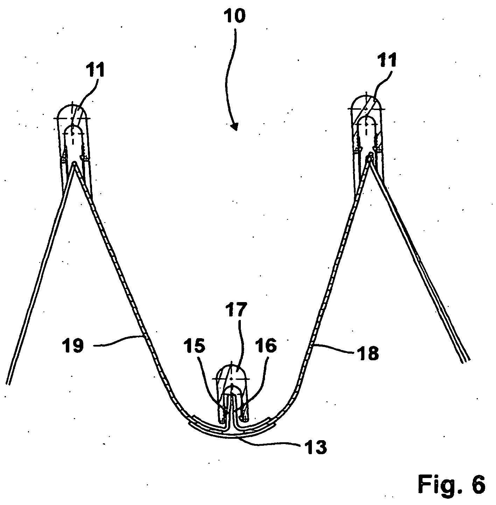

Bei der Ausführungsform gemäß Fig. 6 befinden sich die beiden Laschen 15, 16 zwischen den beiden Schenkelstreifen 18, 19 einerseits und dem Stegstreifen 13 andererseits. Die Laschen 15, 16 stehen auch hier über die Innenseite der Welle über, und werden durch das Profil 17 klemmend erfasst.

Wesentlich hierbei ist die Erkenntnis, dass die eigentliche Steifigkeit des Balges im Bereich des Versteifungsgliedes durch das Profil 17 bewirkt wird, dass zur Fixierung an der Innenseite der Welle die Laschen 15, 16 benötigt. Die Laschen 15, 16 sind an der Innenseite der Welle, d.h. auf der Außenseite des Balges angeordnet, und müssen sich nicht über die gesamte Länge des im Querschnitt U-förmigen Profiles erstrecken, sondern dienen lediglich als Befestigungsmittel für das im Querschnitt U-förmige Profil an den Enden des Profils.

### Bezugszeichenliste:

- 1: Wellenbalg
- 5: Kopf
- 6: Stempel
- 10: Welle
- 11: Balgrahmen
- 13: Stegstreifen
- 15: Lasche
- 16: Lasche
- 17: Profil
- 18: Schenkelstreifen
- 19: Schenkelstreifen
- 20: Versteifungsglied

## Patentansprüche

1. Wellenbaig (1) eines Übergangs zwischen zwei gelenkig miteinander verbundener Fahrzeuge, wobei mehrere Wellen (10) des Wellenbalges (1) auf der Innenseite der Welle (10) ein Vecsteifungsglied (20) aufweisen
**dadurch gekennzeichnet,**
**dass** die Innenseite der welle (10) zwei Laschen (15, 16) aufweist, wobei die beiden Laschen durch ein im Querschnitt U-förmiges Profil (17) erfasst sind.

2. Wellenbalg (1) eines Übergangs zwischen zwei gelenkig miteinander verbundener Fahrzeuge nach Anspruch 1,
**dadurch gekennzeichnet,**
**dass** sich das Versteifungsglied (20) über einen Teil des Umfangs des Wellenbalges (1) erstreckt.

3. Wellenbalg eines Übergangs zwischen zwei gelenkig miteinander verbundener Fahrzeuge nach Anspruch 1 oder 2,
**dadurch gekennzeichnet,**
**dass** bei einer im Querschnitt des Wellenbalges (1) pilzartigen Ausgestaltung des Wellenbalges (1) das Versteifungsglied (20) einer Welle (10) im Bereich des Übergangs vom Stempel (5) zum Kopf (6) des Balges (1) angeordnet ist.

4. Wellenbalg (1) eines Übergangs zwischen zwei gelenkig miteinander verbundener Fahrzeuge nach einem der voranstehenden Ansprüche,
**dadurch gekennzeichnet,**
**dass** die Laschen (15, 16) einen Festigkeitsträger, z. B. ein Gewebe aufweisen.

5. Wellenbalg (1) eines Übergangs zwischen zwei gelenkig miteinander verbundener Fahrzeuge nach Anspruch 4,
**dadurch gekennzeichnet,**
**dass** der Festigkeitsträger mit einem Kunststoff beschichtet ist.

6. Wellenbalg (1) eines Übergangs zwischen zwei gelenkig miteinander verbundener Fahrzeuge nach einem der voranstehenden Ansprüche,
**dadurch gekennzeichnet,**
**dass** die Laschen (15, 16) zu beiden Seiten der Scheitellinie der Welle (10) an der Innenseite der Welle (10) befestigt sind.

7. Wellenbalg (1) eines Übergangs zwischen zwei gelenkig miteinander verbundener Fahrzeuge nach einem der voranstehenden Ansprüche,
**dadurch gekennzeichnet,**
**dass** die im Querschnitt in etwa U-förmige Welle (10) eines Wellenbalges (1) mindestens drei Streifen (13, 18, 19) eines mit Kunststoff beschichteten Festigkeitsträgers aufweist, wobei die beiden Schenkelstreifen (18, 19) durch einen im Stegbereich der Welle angeordneten Stegstreifen (13) verbunden sind.

8. Wellenbalg (1) eines Übergangs zwischen zwei gelenkig miteinander verbundener Fahrzeuge nach Anspruch 7,
**dadurch gekennzeichnet,**
**dass** die Verbindung der Schenkel- und der Stegstreifen (13, 18, 19) durch Kleben und/oder Nähen erfolgt.

9. Wellenbalg (1) eines Übergangs zwischen zwei gelenkig miteinander verbundener Fahrzeuge nach Anspruch 7 oder 8,
**dadurch gekennzeichnet,**
**dass** die beiden seitlichen Schenkelstreifen (18, 19) einer im Querschnitt U-förmigen Welle (10) zur Bildung zweier Laschen (15, 16) über die Oberfläche auf der Innenseite der Welle (10) so weit überstehen, dass diese beiden Laschen von dem im Querschnitt U-förmigen Profil (17) erfassbar sind.

10. Wellenbalg (1) eines Übergangs zwischen zwei gelenkig miteinander verbundener Fahrzeuge nach Anspruch 7 oder 8,
**dadurch gekennzeichnet,**
**dass** zwischen den beiden Schenkelstreifen (18, 19) der im Querschnitt in etwa U-förmigen Welle (10) und dem im Stegbereich der Welle angeordneten Stegstreifen (13), zwei Streifen zur Bildung der auf der Innenseite der Welle (10) angeordneten Laschen (15, 16) befestigt sind.

11. Wellenbalg (1) eines Übergangs zwischen zwei gelenkig miteinander verbundener Fahrzeuge nach Anspruch 7 oder 8,
**dadurch gekennzeichnet,**
**dass** im Bereich der Verbindung der Schenkelstreifen (18, 19) mit dem Stegstreifen (13) einer im Querschnitt in etwa U-förmigen Welle (20) auf der Innenseite der Welle (10) zwei Streifen zur Bildung zweier Laschen (15, 16) befestigt sind.

12. Wellenbalg (1) eines Übergangs zwischen zwei gelenkig miteinander verbundener Fahrzeuge nach einem der voranstehenden Ansprüche,
**dadurch gekennzeichnet,**
**dass** die Wellen (10) eines Wellenbalges (1) untereinander durch umlaufende Balgrahmen (11) verbunden sind.

13. Wellenbalg (1) eines Übergangs zwischen zwei gelenkig miteinander verbundener Fahrzeuge nach einem der Ansprüche 5 bis 12,
**dadurch gekennzeichnet,**
**dass** der Festigkeitsträger der Laschen (15, 16) und/oder der Schenkel- und Stegstreifen (13, 16, 19) mit einem Silikon beschichtet ist.

## Claims

1. A corrugated bellows (1) of a gangway between two articulately connected vehicles, wherein several corrugations (10) of the corrugated bellows (1) have a stiffening member (20) on the inner side of the corrugation (10),
**characterized in that**
the inner side of the corrugation (10) has two flaps (15, 16), wherein the two flaps are clamped by a cross-sectionally U-shaped profile (17).

2. The corrugated bellows (1) of a gangway between two articulately connected vehicles according to claim 1,
**characterized in that**
the stiffening member (20) extends over a part of the circumference of the corrugated bellows (1).

3. The corrugated bellows (1) of a gangway between two articulately connected vehicles according to claim 1 or 2,
**characterized in that**
in a cross-sectionally mushroom-shaped design of the corrugated bellows (1), the stiffening member (20) of a corrugation (10) is disposed in the area of the transition from the stamp (5) to the head (6) of the bellows (1).

4. The corrugated bellows (1) of a gangway between two articulately connected vehicles according to one of the afore-mentioned claims,
**characterized in that**
the flaps (15, 16) have a reinforcement, e.g. a woven fabric.

5. The corrugated bellows (1) of a gangway between two articulately connected vehicles according to claim 4,
**characterized in that**
the reinforcement is coated with a synthetic material.

6. The corrugated bellows (1) of a gangway between two articulately connected vehicles according to one of the afore-mentioned claims,
**characterized in that**
the flaps (15, 16) are fastened to the inner side of the corrugation (10) on both sides of the apex line of the corrugation (10).

7. The corrugated bellows (1) of a gangway between two articulately connected vehicles according to one of the afore-mentioned claims,
**characterized in that**
the cross-sectionally approximately U-shaped corrugation (10) of a corrugated bellows (1) has at least three strips (13, 18, 19) of a reinforcement coated with a synthetic material, wherein the two leg strips (18, 19) are connected by a web strip (13) disposed in the area of the web of the corrugation.

8. The corrugated bellows (1) of a gangway between two articulately connected vehicles according to claim 7,
**characterized in that**
the connection of the leg strips and web strips (13, 18, 19) is carried out by gluing and/or stitching.

9. The corrugated bellows (1) of a gangway between two articulately connected vehicles according to claim 7 or 8,
**characterized in that**
in order to form two flaps (15, 16), the two lateral leg strips (18, 19) of a cross-sectionally U-shaped corrugation (10) protrude over the surface on the inner side of the corrugation (10) far enough for those two flaps to be graspable by the cross-sectionally U-shaped profile (17).

10. The corrugated bellows (1) of a gangway between two articulately connected vehicles according to claim 7 or 8,
**characterized in that**
two strips are fastened between the two leg strips (18, 19) of the cross-sectionally approximately U-shaped corrugation (10) and the web strip (13) disposed in the web area of the corrugation, in order to form the flaps (15, 16) disposed on the inner side of the corrugation (10).

11. The corrugated bellows (1) of a gangway between two articulately connected vehicles according to claim 7 or 8,
**characterized in that**
two strips are fastened in the area of the connection of the leg strips (18, 19) with the web strip (13) of a cross-sectionally approximately U-shaped corrugation (10) on the inner side of the corrugation (10) for forming two flaps (15, 16).

12. The corrugated bellows (1) of a gangway between two articulately connected vehicles according to one of the afore-mentioned claims
**characterized in that**
the corrugations (10) of a corrugated bellows (1) are connected to each other by circumferential bellows frames (11).

13. The corrugated bellows (1) of a gangway between two articulately connected vehicles according to one of the claims 5 to 12,
**characterized in that**
the reinforcement of the flaps (15, 16) and/or of the leg and web strips (13, 16, 19) is coated with a silicone.

## Revendications

1. Soufflet ondulé (1) d'un passage d'intercommunication entre deux véhicules articulés, où plusieurs ondulations (10) du soufflet ondulé (1) comportent un élément de raidissement (20) sur le côté intérieur de l'ondulation (10),
**caractérisé en ce que**
le côté intérieur de l'ondulation (10) comporte deux rabats (15, 16), les deux rabats étant saisis par un profil (17) ayant une section transversale en forme de U.

2. Soufflet ondulé (1) d'un passage d'intercommunication entre deux véhicules articulés selon la revendication 1,
**caractérisé en ce que**
l'élément de raidissement (20) s'étend sur une partie de la circonférence du soufflet ondulé (1).

3. Soufflet ondulé (1) d'un passage d'intercommunication entre deux véhicules articulés selon la revendication 1 ou 2,
**caractérisé en ce que**
lorsque le soufflet ondulé (1) est conçu de manière à ce que le soufflet ondulé (1) ait une coupe transversale en forme de champignon, l'élément de raidissement (20) d'une ondulation (1) est disposé dans la zone de transition entre le tampon (5) et la tête (6) du soufflet (1).

4. Soufflet ondulé (1) d'un passage d'intercommunication entre deux véhicules articulés selon l'une quelconque des revendications précédentes,
**caractérisé en ce que**
les rabats (15, 16) comportent un renfort, par exemple un tissu.

5. Soufflet ondulé (1) d'un passage d'intercommunication entre deux véhicules articulés selon la revendication 4,
**caractérisé en ce que**
le renfort est enduit d'une matière synthétique.

6. Soufflet ondulé (1) d'un passage d'intercommunication entre deux véhicules articulés selon l'une quelconque des revendications précédentes,
**caractérisé en ce que**
les rabats (15, 16) sont fixés au côté intérieur de l'ondulation (10) des deux côtés de la ligne de crête de l'ondulation (10).

7. Soufflet ondulé (1) d'un passage d'intercommunication entre deux véhicules articulés selon l'une quelconque des revendications précédentes,
**caractérisé en ce que**
l'ondulation (10) ayant une coupe transversale approximativement en forme de U d'un soufflet ondulé (1) comporte au moins trois bandes (13, 18, 19) d'un renfort enduit d'une matière synthétique, les deux bandes latérales (18, 19) étant reliées par une bande de traverse (13) disposée dans la zone de traverse de l'ondulation.

8. Soufflet ondulé (1) d'un passage d'intercommunication entre deux véhicules articulés selon la revendication 7,
**caractérisé en ce que**
la connexion des bande latérales et de la bande de traverse (13, 18, 19) s'effectue par collage et/ou couture.

9. Soufflet ondulé (1) d'un passage d'intercommunication entre deux véhicules articulés selon la revendication 7 ou 8,
**caractérisé en ce que**
pour former deux rabats (15, 16), les deux bandes latérales (18, 19) d'une ondulation (10) ayant une coupe transversale en forme de U dépassent suffisamment au-dessus la surface du côté intérieur de l'ondulation (10) pour que ces deux rabats soient saisissables par le profil (17) ayant une coupe transversale en forme de U.

10. Soufflet ondulé (1) d'un passage d'intercommunication entre deux véhicules articulés selon la revendication 7 ou 8,
**caractérisé en ce que**
deux bandes sont fixées entre les deux bandes latérales (19, 19) de l'ondulation (10) ayant une coupe transversale en forme de U et la bande de traverse (13) disposée dans la région de la traverse de l'ondulation pour former les rabats (15, 16) disposées sur le côté intérieur de l'ondulation (10).

11. Soufflet ondulé (1) d'un passage d'intercommunication entre deux véhicules articulés selon la revendication 7 ou 8,
**caractérisé en ce que**
deux bandes sont fixées dans la région de la connexion entre les bandes latérales (18, 19) et la bande de traverse (13) d'une ondulation (10) ayant une coupe transversale approximativement en forme de U sur le côté intérieur de l'ondulation (10) pour former deux rabats (15, 16).

12. Soufflet ondulé (1) d'un passage d'intercommunication entre deux véhicules articulés selon l'une quelconque des revendications précédentes,
**caractérisé en ce que**
les ondulations (10) d'un soufflet ondulé (1) sont connectées entre elles par des cadres de soufflet (11) périphériques.

13. Soufflet ondulé (1) d'un passage d'intercommunication entre deux véhicules articulés selon l'une des revendications 5 à 12,
**caractérisé en ce que**
le renforcement des rabats (15, 16) et/ou des bandes latérales et de traverse (13, 16, 19) est enduit d'un silicone.
